(19) Europäisches Patentamt
European Patent Office
Office européen des brevets

(11) **EP 4 078 129 B1**

(12) **EUROPÄISCHE PATENTSCHRIFT**

(45) Veröffentlichungstag und Bekanntmachung des Hinweises auf die Patenterteilung:
**26.06.2024 Patentblatt 2024/26**

(21) Anmeldenummer: **20817292.4**

(22) Anmeldetag: **01.12.2020**

(51) Internationale Patentklassifikation (IPC):
**G01L 19/00** (2006.01)    **G01L 19/06** (2006.01)
**F16J 3/02** (2006.01)

(52) Gemeinsame Patentklassifikation (CPC):
**G01L 19/0046; F16J 3/02**

(86) Internationale Anmeldenummer:
**PCT/EP2020/084091**

(87) Internationale Veröffentlichungsnummer:
**WO 2021/121964 (24.06.2021 Gazette 2021/25)**

(54) **TRENNMEMBRAN, DRUCKMITTLER MIT EINER SOLCHEN TRENNMEMBRAN UND DRUCKMESSGERÄT MIT EINEM SOLCHEN DRUCKMITTLER**

SEPARATING MEMBRANE, DIAPHRAGM SEAL WITH A SEPARATING MEMBRANE OF SAID TYPE, AND PRESSURE MEASURING UNIT WITH A DIAPHRAGM SEAL OF SAID TYPE

MEMBRANE DE SÉPARATION, JOINT À MEMBRANE DOTÉ D'UNE MEMBRANE DE SÉPARATION DUDIT TYPE, ET UNITÉ DE MESURE DE PRESSION DOTÉE D'UN JOINT À MEMBRANE DUDIT TYPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2019 DE 102019135586**

(43) Veröffentlichungstag der Anmeldung:
**26.10.2022 Patentblatt 2022/43**

(73) Patentinhaber: **Endress+Hauser SE+Co. KG 79689 Maulburg (DE)**

(72) Erfinder:
• **KRUMBHOLZ, Andreas 79689 Maulburg (DE)**
• **PARROTTO, Davide 79576 Weil am Rhein (DE)**
• **GETMAN, Igor 79539 Lörrach (DE)**

(74) Vertreter: **Hahn, Christian Endress+Hauser Group Services (Deutschland)AG +Co. KG Colmarer Straße 6 79576 Weil am Rhein (DE)**

(56) Entgegenhaltungen:
**EP-A2- 1 114 987      EP-B1- 2 300 739
WO-A1-94/25843      US-A1- 2007 000 332**

• **CHRISTIAN WOHLGEMUTH: "Entwurf und galvanotechnische Fertigung metallischer Trennmembranen für mediengetrennte piezoresistive Drucksensoren", INTERNET CITATION, 1. April 2008 (2008-04-01), Seiten I-XIV, XP002545234, Gefunden im Internet: URL:http://tuprints.ulb.tu-darmstadt.de/10 09/3/Entwurf_von_Trennmembranen.pdf [gefunden am 2009-03-07]**
• **KARYAKIN MIKHAIL: "Application of Genetic Algorithms to the Shape Optimization of the Nonlinearly Elastic Corrugated Membranes", E-BOOK, 1 January 2011 (2011-01-01), pages 297-306, XP093056641,**
• **KARYAKIN MIKHAIL ET AL: "Mathematical Modelling of Circular Corrugated Membranes", 2018 5TH INTERNATIONAL CONFERENCE ON MATHEMATICS AND COMPUTERS IN SCIENCES AND INDUSTRY (MCSI), IEEE, 25 August 2018 (2018-08-25), pages 68-71, XP033581364, DOI: 10.1109/MCSI.2018.00023 [retrieved on 2019-07-22]**

EP 4 078 129 B1

**Beschreibung**

Die vorliegende Erfindung betrifft eine Trennmembran und einen Druckmittler mit einer solchen Trennmembran und ein Druckmessgerät mit einem solchen Druckmittler. In der industriellen Prozessmesstechnik ist es üblich, einen zu messenden Druck mittels einer hydraulischen Übertragungsflüssigkeit zu einem Drucksensor zu übertragen. Hierbei ist die Übertragungsflüssigkeit mittels einer Trennmembran von einem Medium getrennt, dessen Druck zu messen ist. Trennmembranen weisen gewöhnlich einen metallischen Werkstoff auf und sind korrugiert, um über einen größeren Volumenhub einen linearen Zusammenhang zwischen Druck und Volumenhub zu erreichen.

Die Veröffentlichung EP 1 114 987 A2 offenbart eine Trennmembran mit Trapezflächen zur Verbesserung der Linearität.

Die Veröffentlichung US 2007/0000332A1 offenbart einen Druckmittler mit einer an einem Druckmittlerkörper befestigten Trennmembran, wobei zwischen dem Druckmittlerkörper und der Trennmembran eine Druckmittlerkammer gebildet ist, deren Gleichgewichtsvolumen eine thermische Ausdehnung aufweist, die der thermischen Ausdehnung der Übertragungsflüssigkeit in der Druckmittlerkammer entpricht. Diese Lösung ist insofern problematisch, als sie das thermische Gleichgewicht der Komponenten voraussetzt.

Die Veröffentlichung WO 94/25843 A1 offenbart einen Druckmittler mit einer Napfmembran, deren Randkontur die Fügestelle zwischen Napfmembran und Druckmittlerkörper schützen soll.

Die Dissertation mit dem Titel "Entwurf und galvanotechnische Fertigung metallischer Trennmembranen mediengetrennte piezoresistive Drucksensoren" offenbart Methoden zur rechnergestützten Optimierung von Trennmembranen mittels analytischer Gleichungen der Platten- und Schalentheorie sowie FEM-Simulation.

Die veröffentlichungen von Karyakin Mikhail mit dem Titel "Application of Genetic Algorithms to the Shape Optimization of the Nonlinearly Elastic Corrugated Membranes" und von Karyakin Mikhail et al. mit dem Titel "Mathematical Modelling of Circular Corrugated Membranes" offenbaren die Anwendung genetischer Algorithmen zur Formoptimierung nichtlinear elastischer Wellmembranen.

Die Trennmembranen werden insbesondere durch die thermische Ausdehnung der Übertragungsflüssigkeit ausgelenkt. Die druckabhängige Auslenkung ist dagegen in den meisten Fällen vergleichsweise gering. Die Auslenkung der Trennmembranen geht mit einem Druckunterschied zwischen den durch die Trennmembran getrennten Volumen einher, der sich als Messfehler auswirkt. Damit letzterer klein bleibt, sollen die Trennmembranen möglichst weich sein. Im Patent EP 2 300 739 B1 ist eine extrem weiche Trennmembran mit einer nicht axisymmetrischen Form offenbart, welche extrem weich ist. Die Herstellung dieser Trennmembran ist jedoch vergleichsweise teuer. Daher besteht weiterhin Bedarf an, optimierten axisymmetrischen Trennmembranen, wobei hier grundsätzlich eine höhere Steifigkeit zu erwarten ist. Um den durch die Trennmembran bewirkten Druckunterschied einfach kompensieren zu können, ist es vorteilhaft, wenn die Kennlinie zwischen Druck und Volumen möglichst linear verläuft.

Di Giovanni gibt einen Überblick zur quantitativen Beschreibung der Eigenschaften von Trennmembranen nach dem Stand der Technik in "Flat and corrugated diaphragm design handbook", ISBN 0-8247-1281-1. Demnach ist die dimensionslose charakteristische Gleichung für eine so genannte Sinusmembran, also eine Trennmembran mit einem regelmäßigen, Wellenmuster gegeben als:

$$\frac{pa^4}{Eh^4} = A_p \frac{y}{h} + B_p \frac{y^3}{h^3}$$

Hierbei sind: p die Druckdifferenz zwischen den beiden Seiten der Trennmembran, welche eine Auslenkung hervorruft, E das Elastizitätsmodul des Werkstoffs der Trennmembran, a der Durchmesser der Trennmembran, h deren Materialstärke und y die durch die Druckdifferenz hervorgerufene Auslenkung des Zentrums der Trennmembran. Das der Auslenkung y des Zentrums entsprechende Volumen V, kann dann beispielsweise mit einer Paraboloidnäherung abgeschätzt werden zu V = π a² y/2 oder mit einer Kegelnäherung zu V = π a² y/3.

Die Koeffizienten $A_p$ und $B_p$ hängen von einem Profilfaktor q des Wellenmusters ab und sind gegeben als:

$$A_p = \frac{2(3+q)(1+q)}{3(1-\mu^2/q^2)}$$

und

$$B_p = \frac{32}{q^2-9}\left[\frac{1}{6} - \frac{3-\mu}{(q-\mu)(q+3)}\right],$$

wobei der μ die Poissonzahl des Werkstoffs der Trennmembran und ist und Profilfaktor q in Abhängigkeit von der Profiltiefe H gegeben ist als:

$$q = \sqrt{\frac{3}{2}\frac{H^2}{h^2} + 1}$$

Es ist ersichtlich, dass der lineare Koeffizient $A_p$ mit zunehmendem q steigt, während der kubische Koeffizient $B_p$ mit steigendem q fällt. Dies bedeutet, dass die Trennmembranen mit größerer Prägetiefe H zwar bei kleinen Auslenkungen steifer sind, aber bei größeren Auslenkungen weniger stark von der Linearität abweichen.

Die Prägetiefe H kann aber für die gängigen Trennmembranmaterialien, beispielsweise Stahl der Sorte 1.4435 nicht beliebig vergrößert werden. Sie ist auf Maximalwerte für H/h < 4 beschränkt. Daher sind der Linearität der Trennmembrankennlinien von Trennmembranen mit einem regelmäßigen Wellenmuster Grenzen gesetzt.

Es ist daher die Aufgabe der vorliegenden Erfindung, eine Trennmembran mit verbesserter Linearität bereitzustellen. Die Aufgabe wird erfindungsgemäß gelöst durch die Trennmembran nach Anspruch 1, den Druckmittler gemäß Anspruch 13 und das Druckmessgerät gemäß Anspruch 14.

Die erfindungsgemäße Trennmembran umfasst:

  einen insbesondere planaren Randbereich zum Fügen der Trennmembran an einem Druckmittlerkörper;

  einen Arbeitsbereich, der gegenüber dem Randbereich in axialer Richtung um mindestens drei Membranstärken, insbesondere um sieben Halbe Membranstärken versetzt ist;

  einen Übergangsbereich zwischen dem Randbereich und dem Arbeitsbereich, der sich über einen Radialbereich von mindestens einem Achtel, beispielsweise nicht weniger als einem Siebtel, insbesondere nicht weniger als einem Sechstel des Außenradius des Übergangsbereichs erstreckt wobei der Übergangsbereich sich über einen Radialbereich von nicht mehr als einem Viertel, insbesondere nicht mehr als einem Fünftel des Außenradius des Übergangsbereichs erstreckt;

  wobei der Arbeitsbereich ein im Wesentlichen planares Zentrum aufweist, dessen Radius insbesondere nicht weniger als ein Sechzehntel des Außenradius des Übergangsbereichs beträgt,

  wobei der Arbeitsbereich zwischen dem im Wesentlichen planaren Zentrum und dem Rand des Arbeitsbereichs ein geprägtes Muster bzw. Wellenmuster aufweist,

  wobei die Trennmembran von der Ruhelage bis zu einem dimensionslosen Druckäquivalent p* von nicht weniger als 250, insbesondere von nicht weniger als 300 eine Kennlinie p*(w) aufweist, wobei für das Bestimmtheitsmaß $R^2$ einer linearen Regression der Kennlinie gilt: $(1 - R^2) < 1\%$, beispielsweise $(1 - R^2) < 0,5\%$, insbesondere $(1 - R^2) < 0,25\%$,

  wobei das dimensionslose Druckäquivalent p* ist gegeben als:

$$p^* = \frac{p}{E} \cdot \left(\frac{a}{h}\right)^4,$$

wobei dimensionslose Auslenkung w ist gegeben als:

$$w := \frac{y}{h} = \frac{3 \cdot V}{\pi \cdot a^2 \cdot h},$$

wobei In den obigen Gleichungen: p die Druckdifferenz zwischen beiden Membranseiten, E der Elastizitätsmodul des Membranmaterials, a der Membranradius, h die Membranstärke, und y die Auslenkung des Membranzentrums sind unter Annahme der Kegelnäherung bei einer gegebenen Volumenverschiebung V, welche die Druckdifferenz p hervorbringt,

wobei das Wellenmuster an das planare Zentrum an und sich bis zum Rand des Arbeitsbereichs erstreckt, undwobei die Amplitude des Wellenmusters von innen nach außen abnimmt.

In einer Weiterbildung der Erfindung gilt für die Steigung S = dp*(w)/dw der obigen linearen Regression S < 24, insbesondere S < 20.

In einer Weiterbildung der Erfindung beträgt der Radius des planaren Zentrums nicht mehr als ein Sechstel, beispielsweise nicht mehr als ein Siebtel, insbesondere nicht mehr als ein Achtel des Außenradius des Übergangsbereichs.

In einer Weiterbildung der Erfindung weist das Wellenmuster nicht mehr als sieben Halbe Wellenzüge, beispielsweise nicht mehr als sechs Halbe Wellenzüge und insbesondere nicht mehr als fünf Halbe Wellenzüge auf.

In einer Weiterbildung der Erfindung weist der innerste Wellenzug des Wellenmusters zwischen den beiden Extremwerten einen axialen Abstand von nicht weniger als einer Membranstärke auf, insbesondere von nicht weniger als fünf Vierteln Membranstärken.

In einer Weiterbildung der Erfindung weist der innerste Wellenzug des Wellenmusters zwischen den beiden Extremwerten einen axialen Abstand von nicht mehr als zwei Membranstärken, beispielsweise nicht mehr als sieben Vierteln Membranstärken, insbesondere nichtmehr als drei Halbe Membranstärken auf.

In einer Weiterbildung der Erfindung weist der äußerste Wellenzug des Wellenmusters zwischen den beiden Extremwerten einen axialen Abstand von nicht mehr als drei Vierteln einer Membranstärken, beispielsweise nicht mehr als einer halben Membranstärke auf.

In einer Weiterbildung der Erfindung weist der Übergangsbereich eine Kegelstumpfform auf.

In einer Weiterbildung der Erfindung beträgt eine mittlere Wellenlänge des Wellenmusters nicht weniger als sechs Membranstärken, beispielsweise nicht weniger als sieben Membranstärken.

In einer Weiterbildung der Erfindung beträgt eine mittlere Wellenlänge des Wellenmusters nicht mehr als zehn Membranstärken, beispielsweise nicht mehr als neun Membranstärken.

In einer Weiterbildung der Erfindung beträgt der Außenradius des Übergangsbereichs nicht weniger als das Zweihundertfache, beispielsweise nicht weniger als das Zweihundertfünfzigfache, insbesondere nicht weniger als das Zweihundertsiebzigfache der Membranstärke.

In einer Weiterbildung der Erfindung beträgt der Außenradius des Übergangsbereichs nicht mehr als das Dreihundertsechzigfache, beispielsweise nicht mehr als das Dreihundertfache der Membranstärke.

In einer Weiterbildung der Erfindung weist die Trennmembran von der Ruhelage bis zur Auslenkung einem dimensionslosen Druckäquivalent $p^*$ von nicht weniger als 250, insbesondere von nicht weniger als 300 eine im wesentlichen axisymmetrische Form auf.

Der erfindungsgemäße Druckmittler umfasst:

eine erfindungsgemäße Trennmembran; und

einen Druckmittlerkörper, wobei der Druckmittlerkörper eine ringförmige Auflagefläche aufweist, welche ein Membranbett umgibt; wobei der Randbereich mit der Auflagefläche unter Bildung einer Druckmittlerkammer zwischen dem Druckmittlerkörper und der Trennmembran gefügt ist.

Das erfindungsgemäße Druckmessgerät umfasst einen erfindungsgemäßen Druckmittler, ein Drucksensorelement und einen hydraulischen Pfad, der mit der Druckmittlerkammer kommuniziert zur Übertragung eines in der Druckmittlerkammer herrschenden Drucks zu dem Sensorelement mittels einer Übertragungsflüssigkeit, wobei die Gesamtmenge der Übertragungsflüssigkeit in der Druckkammer und in dem hydraulischen Pfad so bemessen ist, dass die Trennmembran in dem Maße aus ihrer Ruhelage ausgelenkt ist, dass der durch die Trennmembran auf die Übertragungsflüssigkeit ausgeübte Druck für Temperaturen zwischen 300K und 550 K den Dampfdruck der Übertragungsflüssigkeit übersteigt.

Die Erfindung wird nun anhand der in den Zeichnungen dargestellten Ausführungsbeispiele näher erläutert. Es zeigt:

Fig. 1a: Kennlinien verschiedener Trennmembranen nach dem Stand der Technik (gebrochene Linien) und eines Ausführungsbeispiels einer erfindungsgemäßen Trennmembran (durchgezogene Linie);

Fig. 1b: Eine Kennlinie eines Ausführungsbeispiels einer erfindungsgemäßen Trennmembran in dimensionslosen Koordinaten.

Fig. 2: Ein Profil z(r) einer Trennmembran nach dem Stand der Technik;

Fig. 3: Ein Profil z(r) eines Ausführungsbeispiels einer erfindungsgemäßen Trennmembran; und

Fig. 4: Einen Längsschnitt durch ein Ausführungsbeispiel eines erfindungsgemäßen Druckmessgeräts.

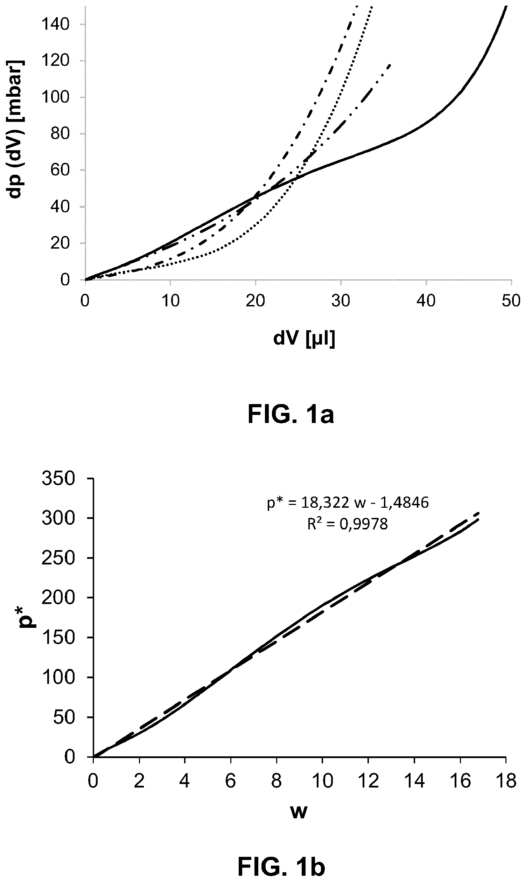

Fig. 1 zeigt ein p(V)-Diagramm, in dem Kennlinien verschiedener Trennmembranen dargestellt sind. Die strichpunktierte Kennlinie und die doppelt strichpunktierten Linien zeigen mit der Paraboloidnäherung ermittelte Kennlinien von Trennmembranen mit einem Durchmesser von 17,5 mm nach di Giovanni mit einem Verhältnis von H/h = 2 und H/h = 4 bei einer Trennmembranstärke von 25 μm.

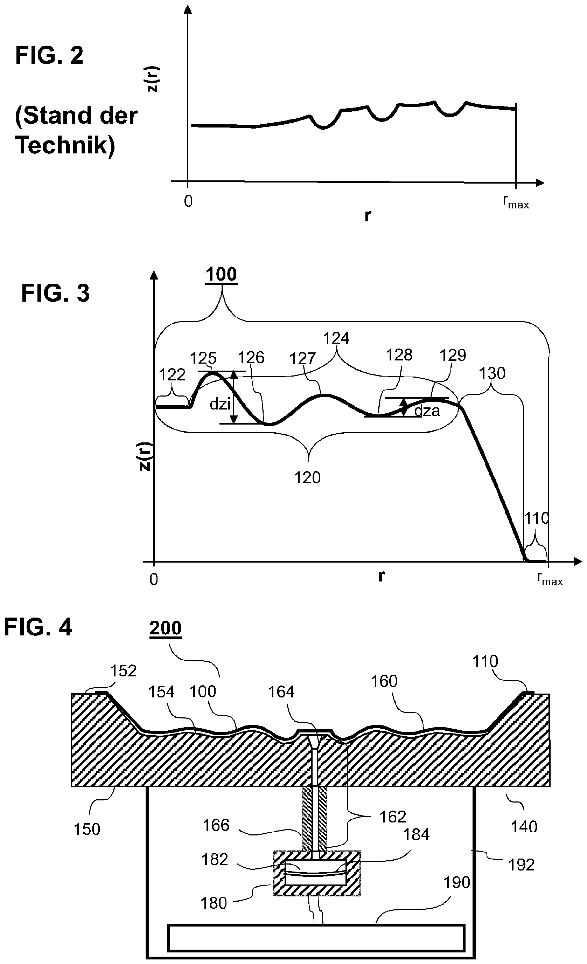

Die punktierte Kennlinie präsentiert Messdaten einer Trennmembran mit einem Durchmesser von 17,5 mm und einer Trennmembranstärke von 25 μm. Das Profil der Trennmembran in der Ruhelage der Trennmembran ist in Fig.2 dargestellt. Die Trennmembran weist drei geprägte konzentrische ringförmige Halbwellen auf, welche bezüglich ihrer unmittelbaren Umgebung in die gleiche Richtung weisen, nämlich in Fig. 2 nach unten. Die Prägetiefe H beträgt etwa 2 Trennmembranstärken. Die Grundform der Trennmembran ist nicht eben, sondern weist ein um etwa 2,5 Trennmembranstärken gegenüber dem Rand abgesenktes Zentrum auf. Die Kennlinie verläuft im Wesentlichen parallel zur Kennlinie mit einer Prägetiefe von H/h =2 nach di Giovanni mit ebener Grundform. Mit einer Prägetiefe von H/h = 4 weist eine Trennmembran nach di Giovanni mit ebener Grundform zwar eine geringere Abweichung von der Linearität auf, aber immer noch in einem solchen Maß, dass die Kompensation des Messfehlers aufgrund der Auslenkung der Trennmembran schwierig zu realisieren ist, insbesondere bei Volumina von mehr als 20 μl. Es sei noch darauf hingewiesen, dass bei der Abschätzung des Volumenhubs mit der Kegelnäherung das einer Auslenkung y zugeordnete Volumen um ein Drittel kleiner ist. Die Abweichungen von der Linearität für Trennmembranen nach di Giovanni würden daher bei einer Abschätzung mit der Kegelnäherung noch deutlicher ausfallen. Die durchgezogene Linie zeigt dagegen die Kennlinie eines Ausführungsbeispiels einer erfindungsgemäßen Trennmembran mit einem Durchmesser von 17 mm, welche eine nahezu konstante Steifigkeit bis zu einem Volumenhub von 40 μl gegenüber der Ruhelage. Dies bedeutet hinsichtlich der Linearität der Trennmembran eine erhebliche Verbesserung gegenüber dem Stand der Technik.

In Fig. 1b ist die Kennlinie der erfindungsgemäßen Trennmembran unabhängig von den konkreten Abmessungen und Materialien dimensionslos dargestellt. Auf Basis einer solchen Darstellung lassen sich Trennmembranen unterschiedlicher Abmessungen miteinander vergleichen. Bei einer nach der Kegelnäherung ermittelten dimensionslosen Auslenkung w von etwa 17 wird ein dimensionsloses Druckäquivalent p* von etwa 300 erreicht.

Das dimensionslose Druckäquivalent p* ist gegeben als:

$$p^* = \frac{p}{E} \cdot \left(\frac{a}{h}\right)^4$$

Die dimensionslose Auslenkung w ist gegeben als:

$$w := \frac{y}{h} = \frac{3 \cdot V}{\pi \cdot a^2 \cdot h}$$

In den obigen Gleichungen sind: p die Druckdifferenz zwischen beiden Membranseiten, E der Elastizitätsmodul des Membranmaterials, a der Membranradius, h die Membranstärke, und y die Auslenkung des Membranzentrums unter Annahme der Kegelnäherung bei einer gegebenen Volumenverschiebung V, welche die Druckdifferenz p hervorbringt.

Die Steigung S = dp*/dw einer linearen Regression der Kennlinie für die Auslenkung zwischen p* = 0 und p* = 300 beträgt weniger als 20 und für das Bestimmtheitsmaß R² gilt: (1 - R²) <0,25%. Diese Wertekombination sind mit den Sinusmembranen nach di Giovanni und der Membranform nach dem im Fig. 2 dargestellten Stand der Technik unerreichbar.

Fig. 3 zeigt die Membranmittenlinie z(r) des Ausführungsbeispiels einer erfindungsgemäßen Trennmembran 100, dessen Kennlinie in Fign. 1a und 1b gezeigt ist.

Die Trennmembran 100 umfasst einen ebenen Randbereich 110, und einen Arbeitsbereich 120, die durch einen im Wesentlichen kegelstumpfförmigen Übergangsbereich 130 miteinander verbunden sind. Es ist vorgesehen, die Trennmemban 100 entlang eines äußeren Radius des Randbereichs 110 mittels einer umlaufenden Fügestelle mit einem Druckmittlerkörper zu verbinden. Der Arbeitsbereich umfasst ein im Wesentlichen planares Zentrum 122, das von einem Wellenmuster 124 umgeben ist, welches sich bis zu einem äußeren Rand des Arbeitsbereichs erstreckt, an den der Übergangsbereich 130 anschließt. Das planare Zentrum 122 weist keine Wellenmuster auf, die zur Vergrößerung des Volumenhubs beitragen. Ein Wellenmuster in diesem Bereich wäre auch als Beitrag zum Gesamtvolumenhub wenig hilfreich, da aufgrund der kleinen Radien das Volumen unter dem Zentrum sehr gering ist. Dennoch können im planaren Zentrum 122 Konturen auftreten, beispielsweise dann, wenn die Trennmembran 100 auf einem Membranbett abgeprägt ist, das in seinem Zentrum eine Öffnung für die Übertragungsflüssigkeit aufweist. Auch wenn die Kontur einer solchen Öffnung im planaren Zentrum 122 abgeprägt ist, gilt letzteres immer noch als planares Zentrum im Sinne der Erfindung.

Die Trennmembran 100 weist einen metallischen Werkstoff auf, insbesondere einen Medienbeständigen Stahl, beispielsweise 1.4435, und hat eine Materialstärke von etwa 30 μm. Der äußere Radius der Trennmembran 100 beträgt etwa 8,5 mm. Der Außenradius des Übergangsbereichs 130 beträgt etwa 8,2 mm, während der Innenradius des Übergangsbereichs nicht mehr als 8 mm beträgt. Die Höhe des Übergangsbereichs beträgt mehr als vier Membranstärken.

Das Wellenmuster weist fünf halbe Wellenzüge auf, deren Amplitude von innen nach außen abnimmt. So beträgt die Differenz zwischen den beiden äußeren Extrema des Wellenmusters etwa ein Drittel einer Membranstärke, während die die Differenz zwischen den beiden inneren Extrema des Wellenmusters etwa vier Drittel der Membranstärke beträgt. Der Radius des planaren Zentrums 122 beträgt etwa ein Zehntel des Radius der Trennmembran 100.

Die solchermaßen geformte Trennmembran zeigt das beobachtete lineare Verhalten. Die Form wird erhalten durch Abprägen einer ebenen Membranronde, die entlang ihres Rands mit einem Druckmittlerkörper gefügt ist, auf einem Membranbett des Druckmittlerkörpers, dessen Kontur als Matrize für die Trennmembran dient.

Fig. 4 zeigt ein erfindungsgemäßes Druckmessgerät 200, welches einen erfindungsgemäßen Druckmittler 140 mit einer erfindungsgemäßen Trennmembran 100. Die Trennmembran 100 ist entlang eines äußeren Radius ihres Randbereichs 110 mit einer umlaufenden Fügestelle mit einem Randbereich 152 des Druckmittlerkörpers 150 gefügt, wobei eine ebene Membranronde mit dem Druckmittlerkörper 150 gefügt wird, und die endgültige Form der Trennmembran 100 durch Abprägen der Membranronde auf einem Membranbett 154 des Druckmittlerkörpers 150 entsteht. Aufgrund der Elastizität des Materials der Trennmembran 100, federt diese nach dem Abprägen am Membranbett 154 in ihre durch das Prägen definierte Gleichgewichtslage zurück, wodurch zwischen der Trennmembran 100 und dem Druckmittlerkörper 150 eine Druckmittlerkammer 160 gebildet ist. Von der Druckmittlerkammer 160 verläuft ein hydraulischer Pfad 162 zu einem Drucksensorelement 180 um eine Messmembran 184 in einer Sensorkammer 182 des Drucksensorelements 180 mit einem in der Druckmittlerkammer 160 herrschenden Druck zu beaufschlagen. Der hydraulische Pfad 162 umfasst eine Bohrung 164 durch den Druckmittlerkörper 150, und eine Kapillarleitung 166, die zwischen dem Druckmittlerkörper 150 und dem Drucksensorelement 180 verläuft. Die Menge einer Übertragungsflüssigkeit in dem zwischen der Trennmembran 100 und der Messmembran 184 eingeschlossenen Raum ist so gewählt, dass die Trennmembran bereits bei 300 K leicht vorgespannt ist, so dass oberhalb von 300 K der durch die Vorspannung bewirkte Druck auf die Übertragungsflüssigkeit höher ist als der Dampfdruck der Übertragungsflüssigkeit. Auf diese Weise wird verhindert, dass die Übertragungsflüssigkeit ausgast, wenn ein an der Trennmembran anstehender Mediendruck unter den Dampfdruck der Übertragungsflüssigkeit fällt.

Das Drucksensorelement weist einen hier nicht im Einzelnen dargestellten elektrischen Wandler auf, um ein druckabhängiges Primärsignal bereitzustellen, welches von einer Messschaltung 190 des Druckmessgeräts 200 verarbeitet wird. Das Druckmessgerät 200 weist weiterhin ein im Wesentlichen metallisches Gehäuse 192 auf, in welchem das Drucksensorelement 180 und die Messschaltung 190 angeordnet sind, wobei das Gehäuse 192 hier mit dem Druckmittlerkörper 150 verbunden ist.

**Patentansprüche**

1.   Trennmembran (100), umfassend:

einen insbesondere planaren Randbereich (110) zum Fügen der Trennmembran (100) an einem Druckmittlerkörper (150);
einen Arbeitsbereich (120), der gegenüber dem Randbereich (110) in axialer Richtung um mindestens drei Membranstärken versetzt ist;
einen Übergangsbereich (130) zwischen dem Randbereich (110) und dem Arbeitsbereich (120), der sich über einen Radialbereich von mindestens einem Achtel, beispielsweise nicht weniger als einem Siebtel, insbesondere nicht weniger als einem Sechstel des Außenradius des Übergangsbereichs (130) erstreckt wobei der Übergangsbereich (130) sich über einen Radialbereich von nicht mehr als einem Viertel, insbesondere nicht mehr als einem Fünftel des Außenradius des Übergangsbereichs (130) erstreckt;
wobei der Arbeitsbereich (120) ein im Wesentlichen planares Zentrum (122) aufweist, dessen Radius insbesondere nicht weniger als ein Sechzehntel des Außenradius des Übergangsbereichs beträgt,
wobei der Arbeitsbereich (120) zwischen dem Zentrum (122) und einem äußeren Rand des Arbeitsbereichs ein geprägtes Muster bzw. Wellenmuster (124) aufweist,
wobei das Wellenmuster (124) an das planare Zentrum (122) anschließt und sich bis zum Rand des Arbeitsbereichs (120) erstreckt,
**dadurch gekennzeichnet,**
**dass** ein dimensionsloses Druckäquivalent p* ist gegeben als:

$$p^* = \frac{p}{E} \cdot \left(\frac{a}{h}\right)^4,$$

**dass** eine dimensionslose Auslenkung w ist gegeben als:

$$w := \frac{y}{h} = \frac{3 \cdot V}{\pi \cdot a^2 \cdot h},$$

wobei p die Druckdifferenz zwischen beiden Membranseiten, E der Elastizitätsmodul des Membranmaterials, a der Membranradius, h die Membranstärke, und y die Auslenkung des Membranzentrums unter Annahme der Kegelnäherung bei einer gegebenen Volumenverschiebung V, welche die Druckdifferenz p hervorbringt,
**dass** die Trennmembran (100) von der Ruhelage bis zur Auslenkung mit einem dimensionslosen Druckäquivalent p* von nicht weniger als 250, insbesondere von nicht weniger als 300 eine Kennlinie p*(w) aufweist, wobei für das Bestimmtheitsmaß $R^2$ einer linearen Regression der Kennlinie gilt: $(1 - R^2) < 1\%$, beispielsweise $(1 - R^2) < 0,5\%$, insbesondere $(1 - R^2) < 0,25\%$, und **dass** eine Amplitude des Wellenmusters (124) von innen nach außen abnimmt.

2.   Trennmembran (100) nach einem der Ansprüche 1 bis 3, wobei der Radius des planaren Zentrums (122) nicht mehr als ein Sechstel, beispielsweise nicht mehr als ein Siebtel, insbesondere nicht mehr als ein Achtel des Außenradius des Übergangsbereichs (130) beträgt.

3.   Trennmembran (100) nach einem der vorhergehenden Ansprüche, wobei das Wellenmuster (124) nicht mehr als sieben Halbe Wellenzüge, beispielsweise nicht mehr als sechs Halbe Wellenzüge und insbesondere nicht mehr als fünf Halbe Wellenzüge aufweist.

4.   Trennmembran (100) nach einem der vorhergehenden Ansprüche, wobei der innerste Wellenzug des Wellenmusters (124) zwischen den beiden Extremwerten des Wellenzugs einen axialen Abstand von nicht weniger als einer Membranstärke aufweist, insbesondere von nicht weniger als fünf Viertel Membranstärken.

5.   Trennmembran (100) nach einem der vorhergehenden Ansprüche, wobei der innerste Wellenzug des Wellenmusters (124) zwischen den beiden Extremwerten (125, 126) des Wellenzugs einen axialen Abstand von nicht mehr als zwei Membranstärken, beispielsweise nicht mehr als sieben Viertel Membranstärken, insbesondere nicht mehr als drei Halbe Membranstärken aufweist.

6.   Trennmembran (100) nach einem der vorhergehenden Ansprüche, wobei der äußerste Wellenzug des Wellenmusters (124) zwischen den beiden Extremwerten (128, 129) des Wellenzugs einen axialen Abstand von nicht mehr als drei Vierteln einer Membranstärke, beispielsweise nicht mehr als einer halben Membranstärke aufweist.

7. Trennmembran (100) nach einem der vorhergehenden Ansprüche, wobei der Übergangsbereich eine Kegelstumpfform aufweist.

8. Trennmembran (100) nach einem der vorhergehenden Ansprüche, wobei eine mittlere Wellenlänge des Wellenmusters (124) nicht weniger als sechs Membranstärken, beispielsweise nicht weniger als sieben Membranstärken beträgt.

9. Trennmembran (100) nach einem der vorhergehenden Ansprüche, wobei eine mittlere Wellenlänge des Wellenmusters (124) nicht mehr als zehn Membranstärken, beispielsweise nicht mehr als neun Membranstärken beträgt.

10. Trennmembran (100) nach einem der vorhergehenden Ansprüche, wobei der Außenradius des Übergangsbereichs (130) nicht weniger als das Zweihundertfache, beispielsweise nicht weniger als das Zweihundertfünfzigfache, insbesondere nicht weniger als das Zweihundertsiebzigfache der Membranstärke beträgt.

11. Trennmembran (100) nach einem der vorhergehenden Ansprüche, wobei der Außenradius des Übergangsbereichs (130) nicht mehr als das Dreihundertsechzigfache, beispielsweise nicht mehr als das Dreihundertfache der Membranstärke beträgt.

12. Trennmembran (100) nach einem der vorhergehenden Ansprüche, wobei die Trennmembran (100) von der Ruhelage bis zur Auslenkung mit einem dimensionslosen Druckäquivalent p* von nicht weniger als 250, insbesondere von nicht weniger als 300 eine im wesentlichen axisymmetrische Form aufweist.

13. Druckmittler (140), umfassend:

eine Trennmembran (100) nach einem der vorhergehenden Ansprüche; und
einen Druckmittlerkörper (150), wobei der Druckmittlerkörper (150) eine ringförmige Auflagefläche (152) aufweist, welche ein Membranbett (154) umgibt;
wobei der Randbereich (110) der Trennmembran (100) mit der Auflagefläche (152) des Druckmittlerkörpers (150) unter Bildung einer Druckmittlerkammer (160) zwischen dem Druckmittlerkörper (150) und der Trennmembran (100) gefügt ist.

14. Druckmessgerät (200), umfassend:

einen Druckmittler (140) nach Anspruch 13;
ein Drucksensorelement (180);
und einen hydraulischen Pfad (162), der mit der Druckmittlerkammer (160) kommuniziert zur Übertragung eines in der Druckmittlerkammer (160) herrschenden Drucks zu dem Sensorelement (180) mittels einer Übertragungsflüssigkeit,
wobei die Gesamtmenge der Übertragungsflüssigkeit in der Druckkammer (160) und in dem hydraulischen Pfad (162) so bemessen ist, dass die Trennmembran (100) in dem Maße aus ihrer Ruhelage ausgelenkt ist, dass der durch die Trennmembran (100) auf die Übertragungsflüssigkeit ausgeübte Druck für Temperaturen zwischen 300K und 550 K den Dampfdruck der Übertragungsflüssigkeit übersteigt.

**Claims**

1. A separating diaphragm (100), comprising:

one in particular planar edge area (110) for joining the separating diaphragm (100) to a diaphragm seal body (150);
one operating area (120), which is offset from the edge area (110) in the axial direction by at least three diaphragm thicknesses;
one transition area (130) between the edge area (110) and the operating area (120), which extends over a radial area of at least one eighth, for example not less than one seventh, in particular not less one sixth of the outer radius of the transition area (130), wherein the transition area (130) extends over a radial area of no more than one quarter, in particular no more than one fifth of the outer radius of the transition area (130);
wherein the operating area (120) exhibits an essentially planar center (122), whose radius is in particular not less than one sixth of the outer radius of the transition area,
wherein the operating area (120) between the center (122) and an outer edge of the operating area exhibits a shaped pattern or wave pattern (124),
wherein the wave pattern (124) borders the planar center (122) and extends up to the edge of the operating area (120), **characterized in that** a dimensionless pressure equivalent p* is provided as:

$$p^* = \frac{p}{E} \cdot \left(\frac{a}{h}\right)^4,$$

that a dimensionless deflection w is provided as:

$$w := \frac{y}{h} = \frac{3 \cdot V}{\pi \cdot a^2 \cdot h},$$

wherein p represents the pressure difference between the two sides of the diaphragm, E represents the modulus of elasticity of the diaphragm material, a represents the radius of the diaphragm, h represents the diaphragm thickness, and y represents the deflection of the center of the diaphragm, assuming tapering proximity with a volume-specific shift V, which generates the pressure difference p, such that the separating diaphragm (100) exhibits a characteristic curve p*(w) from the resting position to deflection with a dimensionless pressure equivalent p* of no less than 250, in particular of no less than 300, wherein the following characteristic curve applies to the coefficient of determination $R^2$ of a linear regression: $(1 - R^2) < 1\%$, for example $(1 - R^2) < 0.5\%$, in particular $(1 - R^2) < 0.25\%$, and that an amplitude of the wave pattern (124) decreases from the inside to the outside.

2. A separating diaphragm (100) according to one of the claims 1 to 3, wherein the radius of the planar center (122) is no more than a sixth, for example no more than a seventh, in particular no more than an eighth of the outer radius of the transition area (130).

3. A separating diaphragm (100) according to one of the preceding claims, wherein the wave pattern (124) exhibits no more than seven half wave trains, for example no more than six half wave trains, and in particular no more than five half wave trains.

4. A separating diaphragm (100) according to one of the preceding claims, wherein the innermost wave train of the wave pattern (124) exhibits an axial distance between the two extreme values of the wave train of no less than one diaphragm thickness, in particular no less than five quarter diaphragm thicknesses.

5. A separating diaphragm (100) according to one of the preceding claims, wherein the innermost wave train of the wave pattern (124) exhibits an axial distance between the two extreme values (125, 126) of the wave train of no more than two diaphragm thicknesses, for example no more than seven quarter diaphragm thicknesses, in particular no more than three half diaphragm thicknesses.

6. A separating diaphragm (100) according to one of the preceding claims, wherein the outermost wave train of the wave pattern (124) exhibits an axial distance between the two extreme values of the wave train of no more than three quarters of a diaphragm thickness, for example no more than one half diaphragm thickness.

7. A separating diaphragm (100) according to one of the preceding claims, wherein the transition area exhibits a truncated cone form.

8. A separating diaphragm (100) according to one of the preceding claims, wherein a mean wavelength of the wave pattern (124) is no less than six diaphragm thicknesses, for example no less than seven diaphragm thicknesses.

9. A separating diaphragm (100) according to one of the preceding claims, wherein a mean wavelength of the wave pattern (124) is no greater than ten diaphragm thicknesses, for example no greater than nine diaphragm thicknesses.

10. A separating diaphragm (100) according to one of the preceding claims, wherein the outer radius of the transition area (130) is no less than two hundred times, for example no less than two hundred and fifty times, in particular no less than two hundred and seventy times the diaphragm thickness.

11. A separating diaphragm (100) according to one of the preceding claims, wherein the outer radius of the transition area (130) is no more than three hundred and sixty times, for example no more than three hundred times the diaphragm thickness.

12. A separating diaphragm (100) according to one of the preceding claims, wherein the separating diaphragm (100) exhibits an essentially axisymmetric shape from the resting position to deflection with a dimensionless pressure equivalent p* of no less than 250, in particular no less than 300.

13. A diaphragm seal (140), comprising:

   a separating diaphragm (100) according to one of the preceding claims; and a diaphragm seal body (150), wherein the diaphragm seal body (150) exhibits a ring-shaped contact surface (152) that surrounds a diaphragm bed (154); wherein the edge area (110) of the separating diaphragm (100) is joined to the contact surface (152) of the diaphragm seal body (150) in order to form a diaphragm seal chamber (160) between the diaphragm seal body (150) and the separating diaphragm (100).

14. A pressure measuring device (200), comprising:

a diaphragm seal (140) according to claim 13; a pressure sensor element (180); and a hydraulic path (162), which communicates with the diaphragm seal chamber (160) to transmit a pressure present in the diaphragm seal chamber (160) to the sensor element (180) using a transfer fluid, wherein the total volume of the transfer fluid is dimensioned both in the pressure chamber (160) and in the hydraulic path (162) in such a way that the separating diaphragm (100) is deflected from its resting position to such an extent that the pressure exerted by the separating diaphragm (100) on the transfer fluid exceeds the vapor pressure of the transfer fluid for temperatures between 300K and 550 K.

## Revendications

1. Membrane de séparation (100), comprenant :

   une zone de bordure (110), notamment plane, destinée à l'assemblage de la membrane de séparation (100) sur un corps de séparateur (150) ; une zone de travail (120), laquelle est décalée par rapport à la zone de bordure (110) dans le sens axial d'au moins trois épaisseurs de membrane ; une zone de transition (130) entre la zone de bord (110) et la zone de travail (120), laquelle zone de transition s'étend sur une zone radiale d'au moins un huitième, par exemple pas moins d'un septième, notamment pas moins d'un sixième du rayon extérieur de la zone de transition (130), la zone de transition (130) s'étendant sur une zone radiale de pas plus d'un quart, notamment pas plus d'un cinquième du rayon extérieur de la zone de transition (130) ; la zone de travail (120) présentant un centre pour l'essentiel plan (122), dont le rayon n'est notamment pas inférieur à un seizième du rayon extérieur de la zone de transition, la zone de travail (120) présentant un motif gaufré ou un motif d'onde (124) entre le centre (122) et un bord extérieur de la zone de travail, le motif ondulé (124) étant contigu au centre plan (122) et s'étendant jusqu'au bord de la zone de travail (120),

   **caractérisé**

   **en ce qu'**un équivalent de pression adimensionnel p* est défini par la formule suivante :

$$p^* = \frac{p}{E} \cdot \left(\frac{a}{h}\right)^4,$$

**en ce qu'**une déviation adimensionnelle w est définie par la formule suivante :

$$w := \frac{y}{h} = \frac{3 \cdot V}{\pi \cdot a^2 \cdot h},$$

où p est la différence de pression entre les deux côtés de la membrane, E est le module d'élasticité du matériau de la membrane, a est le rayon de la membrane, h est l'épaisseur de la membrane et y est la déviation du centre de la membrane en supposant l'approximation d'un cône pour un déplacement de volume donné V, lequel déplacement produit la différence de pression p, **en ce que** la membrane de séparation (100) présente, de la position de repos à la déviation avec un équivalent de pression adimensionnel p* non inférieur à 250, notamment non inférieur à 300, une courbe caractéristique p*(w), le coefficient de détermination $R^2$ d'une régression linéaire de la courbe caractéristique satisfaisant à la condition suivante : $(1 - R^2) < 1$ %, par exemple $(1 - R^2) < 0,5$ %, notamment $(1 - R^2) < 0,25$ %, et **en ce qu'**une amplitude du motif d'onde (124) diminue de l'intérieur vers l'extérieur.

2. Membrane de séparation (100) selon l'une des revendications 1 à 3, pour laquelle le rayon du centre plan (122) n'est pas supérieur à un sixième, par exemple pas supérieur à un septième, notamment pas supérieur à un huitième du rayon extérieur de la zone de transition (130).

3. Membrane de séparation (100) selon l'une des revendications précédentes, pour laquelle le motif d'onde (124) ne comprend pas plus de sept demi-trains d'ondes, par exemple pas plus de six demi-trains d'ondes, et notamment pas plus de cinq demi-trains d'ondes.

4. Membrane de séparation (100) selon l'une des revendications précédentes, pour laquelle le train d'ondes le plus intérieur du motif d'onde (124) présente une distance axiale entre les deux valeurs extrêmes du train d'ondes qui n'est pas inférieure à une épaisseur de membrane, notamment qui n'est pas inférieure à cinq quarts d'épaisseur de membrane.

5. Membrane de séparation (100) selon l'une des revendications précédentes, pour laquelle le train d'ondes le plus intérieur du motif d'onde (124) présente, entre les deux valeurs extrêmes (125, 126) du train d'ondes, une distance axiale qui n'est pas supérieure à deux épaisseurs de membrane, par exemple pas supérieure à sept quarts d'épaisseur de membrane, notamment pas supérieure à trois demi-épaisseurs de membrane.

6. Membrane de séparation (100) selon l'une des revendications précédentes, pour laquelle le train d'ondes le plus extérieur du motif d'onde (124) présente, entre les deux valeurs extrêmes (128, 129) du train d'ondes, une distance axiale qui n'est pas supérieure aux trois quarts d'une épaisseur de membrane, par exemple pas supérieure à une demi-épaisseur de membrane.

7. Membrane de séparation (100) selon l'une des revendications précédentes, pour laquelle la zone de transition présente une forme tronconique.

8. Membrane de séparation (100) selon l'une des revendications précédentes, pour laquelle une longueur d'onde moyenne du motif d'onde (124) n'est pas inférieure à six épaisseurs de membrane, par exemple pas inférieure à sept épaisseurs de membrane.

9. Membrane de séparation (100) selon l'une des revendications précédentes, pour laquelle une longueur d'onde moyenne du motif d'onde (124) n'est pas supérieure à dix épaisseurs de membrane, par exemple pas supérieure à neuf épaisseurs de membrane.

10. Membrane de séparation (100) selon l'une des revendications précédentes, pour laquelle le rayon extérieur de la zone de transition (130) n'est pas inférieur à deux cents fois, par exemple pas inférieur à deux cent cinquante fois, notamment pas inférieur à deux cent soixante-dix fois, l'épaisseur de la membrane.

11. Membrane de séparation (100) selon l'une des revendications précédentes, pour laquelle le rayon extérieur de la zone de transition (130) n'est pas supérieur à trois cent soixante fois, par exemple pas supérieur à trois cents fois, l'épaisseur de la membrane.

12. Membrane de séparation (100) selon l'une des revendications précédentes, pour laquelle la membrane de séparation (100) présente une forme pour l'essentiel axisymétrique à partir de la position de repos jusqu'à la déviation avec un équivalent de pression adimensionnel p* non inférieur à 250, notamment non inférieur à 300.

13. Séparateur (140), comprenant :

une membrane de séparation (100) selon l'une des revendications précédentes ; et
un corps de séparateur (150), le corps de séparateur (150) présentant une surface d'appui annulaire (152), laquelle surface entoure un lit de membrane (154) ;
la partie de bord (110) de la membrane de séparation (100) étant jointe à la surface d'appui (152) du corps de séparateur (150) pour former une chambre de séparateur (160) entre le corps de séparateur (150) et la membrane de séparation (100).

14. Transmetteur de pression (200), comprenant :

un séparateur (140) selon la revendication 13 ;
un élément capteur de pression (180) ;
et un chemin hydraulique (162) communiquant avec la chambre de séparateur (160) pour transmettre une pression régnant dans la chambre de séparateur (160) à l'élément capteur (180) au moyen d'un liquide de transmission,
la quantité totale de liquide de transmission dans la chambre de pression (160) et dans le chemin hydraulique (162) étant telle que la membrane de séparation (100) est déviée de sa position de repos dans une mesure telle que la pression exercée par la membrane de séparation (100) sur le liquide de transmission dépasse la pression de vapeur du liquide de transmission pour des températures comprises entre 300 K et 550 K.

**FIG. 1a**

p* = 18,322 w - 1,4846
R² = 0,9978

**FIG. 1b**

**FIG. 2**

**(Stand der Technik)**

**100**

**FIG. 3**

**FIG. 4**

200

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1114987 A2
- US 20070000332 A1
- WO 9425843 A1
- EP 2300739 B1

**In der Beschreibung aufgeführte Nicht-Patentliteratur**

- **KARYAKIN MIKHAIL.** *Application of Genetic Algorithms to the Shape Optimization of the Nonlinearly Elastic Corrugated Membranes*
- **KARYAKIN MIKHAIL et al.** *Mathematical Modelling of Circular Corrugated Membranes*
- Flat and corrugated diaphragm design handbook